# EUROPÄISCHE PATENTSCHRIFT

(11) **EP 2 154 611 B1**
(45) Veröffentlichungstag und Bekanntmachung des Hinweises auf die Patenterteilung: **04.01.2012**
(21) Anmeldenummer: 08014389.4
(22) Anmeldetag: 12.08.2008
(51) Int. Cl.: G06F 11/10, G06F 11/20

(54) **Datenspeichersystem und Verfahren zum Betreiben des gleichen**
Data storage system and method for operating same
Système de stockage de données et son procédé de fonctionnement

(43) Veröffentlichungstag der Anmeldung: 17.02.2010
(73) Patentinhaber: STRATO AG, 10587 Berlin (DE)
(72) Erfinder: Jansen, Arne, 14089 Berlin (DE)
(74) Vertreter: Bittner, Thomas L.

(56) Entgegenhaltungen:
- US-A- 5 708 769
- US-A- 6 158 017
- US-A1- 2005 279 837
- US-A1- 2006 129 873
- US-A1- 2008 016 435

## Beschreibung

Die Erfindung betrifft ein Datenspeichersystem, insbesondere RAID basiertes Speichersystem, und ein Verfahren zum Betreiben.

### Hintergrund der Erfindung

Derartige Datenspeichersysteme werden auf dem Gebiet der Massenspeicherung von Daten eingesetzt. Üblicherweise werden mehrere Speichereinheiten zu Gruppen zusammengefügt. Als Redundanzgruppe wird dann eine Gruppe redundant gebildeter Speichereinheiten bezeichnet. Mit Redundanz ist im Folgenden insbesondere das Bereitstellen einer verbesserten Ausfallsicherheit gemeint, also beispielsweise das Gestatten eines Weiterarbeitens bei einem Ausfall und/oder eine Rekonstruktion der Daten von ausgefallenen Einheiten. Hierdurch werden in dem Datenspeichersystem die Verfügbarkeit der Daten, die Absicherung gegen Datenverlust erhöht.

Als eine Ausführung derartiger Redundanzgruppen sind so genannte RAID-Gruppen (RAID-*"Redundant Array of Independent Disks*") bekannt. Üblicherweise sind die Speichereinheiten als Festplattenspeicher ausgeführt. Eine RAID-Gruppe ist dann eine redundante Anordnung unabhängiger Festplatten. Es sind verschiedene Versionen von RAID-Gruppen vorgeschlagen worden. In einem Datenspeichersystem kann die RAID-Gruppe als ganzes selbst wiederum eine eigenständige und unabhängige Speichereinheit bilden, die in einer übergeordneten Speichersystemebene als Teil einer übergeordneten RAID-Gruppe betrachtet wird. Allerdings sind die Speichereinheiten aus der nun in die übergeordnete Speichersystemebene einbezogenen RAID-Gruppe für die Speichersystemverwaltung in der übergeordneten Speichersystemebene weder sichtbar noch individuell adressierbar. Vielmehr ist die RAID-Gruppe in der übergeordneten Speichersystemebene, die auch als übergeordnete Hierarchieebene bezeichnet werden kann, nur als eine Gesamteinheit "ansprechbar".

RAID-Gruppen zeichnen sich dadurch aus, dass eine Anzahl von Speichereinheiten ausfallen kann, ohne dass Daten verloren gehen oder dass die RAID-Speicherverwaltung nicht mehr funktionsfähig ist. Eine weitere Eigenschaft einer RAID-Gruppe ist die Zeit, die benötigt wird, um nach einem Ausfall der RAID-Gruppe den normalen Betriebszustand wieder herzustellen, was auch als Rekonstruktion bezeichnet wird. Darüber hinaus kann eine RAID-Gruppe anhand der Beschleunigung charakterisiert werden, die für Schreib- / Leseoperationcn erreicht wird.

Bekannte Arten von RAID-Gruppen sind zum Beispiel RAID 1, RAID 4/5 sowie RAID 6 / RAID DP. Bei RAID 1 besteht jede RAID-Gruppe aus zwei Festplatten. Jede Schreiboperation wird auf beiden Festplatten parallel ausgeführt. Hierbei darf eine Festplatte ausfallen, bevor Daten verloren gehen. Bei RAID 4/5 besteht jede RAID-Gruppe aus n + 1 Platten. n Platten werden zum Speichern von Daten verwendet, die n + erste Platte zum Ablegen der Parität (Redundanz). Bei RAID 5 werden Daten und Parität auf alle Festplatten verteilt, wobei jedoch die nutzbare Kapazität identisch ist. Hier darf eine Festplatte ausfallen, ohne dass Daten verloren gehen. RAID. 6 / RAID DP sieht für jede RAID-Crruppe n + 2 Platten vor, wobei n Festplatten zur Datenspeicherung und zwei Festplatten für die Parität verwendet werden. Es dürfen zwei Festplatten ausfallen, ohne dass Daten verloren gehen. Bei RAID 6 werden wie bei RAID 5 Daten und Parität auf alle Festplatten verteilt.

Diese grundlegenden Arten von RAID-Gruppen lassen sich in die oben bereits erwähnten hierarchischen Strukturen einbeziehen. Bekannt sind beispielsweise Kombinationen von RAID 1 sowie Kombinationen von RAID 4/5/6 mit RAID 1 als untere Schicht. Vorgesehen sein können aber auch Kombinationen aus RAID 4 und RAID 5.

Aus der Patentschrift US 6 158 017 ist ein Verfahren zum Speichern einer Parität und Neuaufbauen des Dateninhalts von zwei ausgefallenen Platten in einem externen Speicher-Subsystem bekannt, das die Schritte umfasst: Bereitstellen einer als eine Matrix von (N - 1) * N definierte Plattenanordnung, die N Platten umfasst, von denen jede logisch in N - 1 Datenblöcke unterteilt ist, wobei N eine Primzahl ist, wobei die Datenblöcke einer Reihe als eine horizontale Paritätsgruppe definiert sind, wobei die in einer nach rechts und nach oben gebildeten kontinuierlichen Linie vorliegenden Blöcke als eine diagonale Paritätsgruppe definiert sind.

Die Anmeldeschrift US 2006/0129873 A1 offenbart ein Cehlertolerantes System für Speicheranordnungen, das Paritätswerte auf von den Datenelementen getrennten Platten (horizontal ausgerichtet) und auf den die Datenelemente aufweisenden Platten (vertikal ausgerichtet) speichert.

Aus der Anmeldeschrift US 2008/0016435 A1 ist ein Verfahren einer symmetrischen Dreifachparität mit einer eine Anzahl von p Platten umfassenden Anordnung bekannt.

Die Patentschrift US 5 708 769 offenbart ein System einer redundanten Speicheranordnung mit einer Mehrzahl von physikalischen Speichereinheiten, auf die blockweise zugegriffen werden kann, wobei die physikalischen Speichereinheiten als ein oder mehrere logische Speichereinheiten konfiguriert sind.

Aus der Anmeldung US 2005/0279837 A1 ist ein Verfahren zur Bereitstellung eines Schutzes vor Datenverlust in einer Speichervorrichtung bekannt, wobei die Speichereinheiten alle individuell adressierbar sind.

### Zusammenfassung der Erfindung

Aufgabe der Erfindung ist es, ein verbessertes Datenspeichersystem sowie ein Verfahren zum Betreiben anzugeben, mit denen die Absicherung gegen Datenverlust verbessert ist.

Diese Aufgabe wird erfindungsgemäß durch ein Datenspeichersystem nach dem unabhängigen Anspruch 1 sowie ein Verfahren zum Betreiben nach dem unabhängigen Anspruch 7 und die weiteren unabhängigen Ansprüche 13, 14 und 15 gelöst. Vorteilhafte Ausgestaltungen der Erfindung sind Gegenstand von abhängigen Unteransprüchen.

Es ist also vorgesehen, dass wenigstens eine der Speichereinheiten mindestens Teil einer Redundanzgruppe und Teil einer weiteren Redundanzgruppe ist und somit eine der Speichereinheiten sowohl in der Redundanzgruppe als auch eine der Speichereinheiten in der weiteren Redundanzgruppe bildet. Diese kann als eine Zuordnung ein und derselben Speichereinheit zumindest zur Redundanzgruppe und zur weiteren Redundanzgruppe betrachtet werden. Sowohl die Redundanzgruppe als auch die weitere Redundanzgruppe sind in der gleichen Speichersystemebene oder Hierarchieebene des Datenspeichersystems gebildet, sodass die jeweiligen Speichereinheiten individuell oder direkt von der implementierten Speichersystemverwaltung in der Speichersystemebene adressierbar sind, was einer individuellen oder direkten Zugriffsmöglichkeit auf die einzelnen Speichereinheiten durch die Speichersystemverwaltung in der Speichersystemebene entspricht. Die Redundanzgruppen bilden jeweils Gruppen redundant gebildeter Speichereinheiten.

Mit Hilfe der Erfindung werden die Möglichkeiten, beim Ausfall Daten wieder her-zustellen" erweitert. Es verringert sich insgesamt die Ausfallwahrscheinlichkeit des Datenspeichersystems. Darüber hinaus wird die Rekonstruktions- oder Wiederherstellungsgeschwindigkeit erhöht, da für die Wiederherstellung von Daten auf die elektronischen Informationen aus mehreren Redundanzgruppen zurückgegriffen werden kann.

Eine bevorzugte Weiterbildung der Erfindung sieht vor, dass die wenigstens eine der Speichereinheiten mehr als zwei der wenigstens zwei Redundanzgruppen zugeordnet ist. Auf diese Art und Weise ist eine Art mehrdimensionale Zuordnungsstruktur für die Speichereinheiten aus den mehreren Redundanzgruppen gebildet.

Eine Weiterbildung der Erfindung kann vorsehen, dass mehrere der Speichereinheiten mehr als einer der wenigstens zwei Redundanzgruppen zugeordnet sind, wobei die mehreren Speichereinheiten jeweils einer gleichen Anzahl von Redundanzgruppen zugeordnet sind.

Bevorzugt sieht eine Fortbildung der Erfindung vor, dass die wenigstens zwei Redundanzgruppen jeweils als eine Paritäts-Gruppe gebildet sind.

Bei einer vorteilhaften Ausgestaltung der Erfindung kann vorgesehen sein, dass die wenigstens zwei Redundanzgruppen jeweils als eine RAID-Gruppe gebildet sind.

Eine Weiterbildung der Erfindung kann vorsehen, dass die mehreren Speichereinheiten jeweils als ein Festplattenspeicher ausgeführt sind.

Eine bevorzugte Weiterbildung der Erfindung sieht vor, dass die mehreren Speichereinheiten jeweils als ein Flash-Speicher ausgeführt sind. Ein Flash-Speicher wird auch als SSD-Speicher (Solid State Disk) bezeichnet. Ferner kann vorgesehen sein, dass die mehreren Speichereinheiten als Kombination von Flash-Speichern und Festplattenspeichern ausgeführt sind.

Eine vorteilhafte Ausführungsform der Erfindung sieht vor, dass die Speichereinheiten und die weiteren Speichereinheiten einer zweidimensionalen Struktur entsprechend gebildet sind. Es ist so eine zweidimensionale Verwaltungs- oder Organisationsstruktur geschaffen. Die zweidimensionale Struktur kann beispielsweise als eine Rechteckstruktur ausgeführt sein. Es werden so Zeilen und Spalten gebildet, deren Elemente die einzelnen Speichereinheiten darstellen. Die Redundanzgruppen werden entlang der Zeilen und Spalten gebildet. Auf diese Weise ist es ermöglicht, eine Speichereinheit einerseits einer zeilenweise gebildeten Redundanzgruppe und andererseits auch einer spaltenweise gebildeten Redundanzgruppe zuzuordnen. Darüber hinaus kann die Ausbildung von Redundanzgruppen entlang der Diagonalen vorgesehen sein.

In Verbindung mit den Ausgestaltungen des Verfahrens zum Betreiben eines Datenspeichersystems gelten die im Zusammenhang mit zugehörigen Ausführungsformen des Datenspeichersystems gemachten Erläuterungen entsprechend.

Weitere Aspekte der Erfindung betreffen ein Computerprogramm mit Programmcode zur Durchführung aller Schritte des erfindungsgemäßen Verfahrens zum Betreiben eines Datenspeichersystems, wenn der Programmcode auf einem Computer ausgeführt wird, ein entsprechendes Computerprogramm mit Programmcode, der auf einem maschinenlesbaren Träger gespeichert ist, sowie ein entsprechendes Computerprogramm-Produkt. Mit Computer ist hier insbesondere eine Steuerungseinrichtung zur Steuerung von Speichereinheiten, insbesondere Festplatten, gemeint.

### Beschreibung bevorzugter Ausführungsbeispiele der Erfindung

Die Erfindung wird im Folgenden anhand von bevorzugten Ausführungsbeispielen unter Bezugnahme auf Figuren einer Zeichnung näher erläutert. Hierbei zeigen:
- Fig. 1: eine schematische Darstellung einer Anordnung von Speichereinheiten eines Daten- speichersystems gemäß einer zweidimensionalen Struktur mit mehreren Redun- danzgruppen,
- Fig. 2: eine schematische Darstellung einer weiteren Anordnung von Speichereinheiten eines Datenspeichersystems gemäß einer zweidimensionalen Struktur mit mehreren Redundanzgruppen und
- Fig. 3: eine schematische Darstellung einer Anordnung von Speichereinheiten eines Daten- speichersystems gemäß einer dreidimensionalen Struktur mit mehreren Redundanz- gruppen.

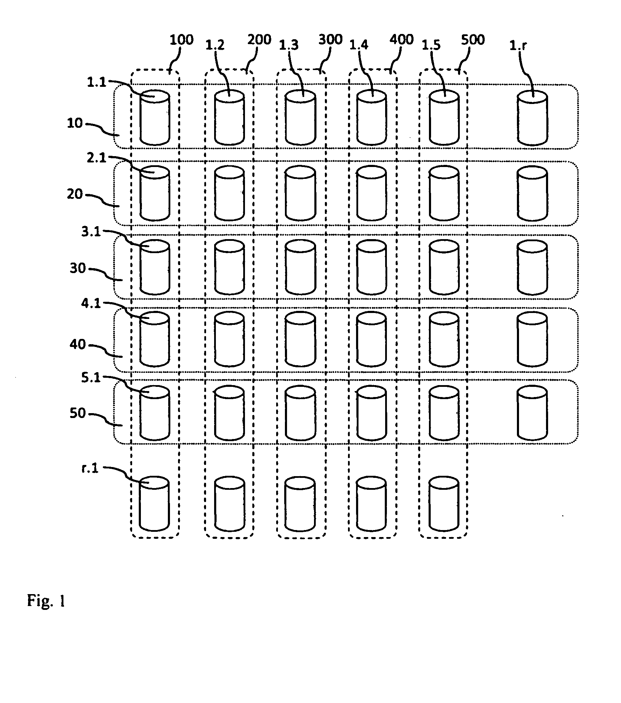

Fig. 1 zeigt eine schematische Darstellung einer Anordnung von Speichereinheiten eines Datenspeichersystems gemäß einer zweidimensionalen Struktur mit mehreren Redundanzgruppen. In der dargestellten Ausführungsform sind die Speichereinheiten jeweils als ein Festplattenspeicher ausgeführt.

Beispielhaft wird hier von einer Anordnung von fünf mal fünf Speichereinheiten 1.1, ..., 1.5, 2.1, ..., 2.5, ..., 5.1, ..., 5.5 ausgegangen. Für die Redundanz der zweidimensionalen Anordnung werden noch weitere Speichereinheiten 1.r, ..., 5.r sowie r.1, ..., r.5 hinzugefügt.

Speichereinheiten 1.1, ..., 1.5, 1.r sind einer ersten Redundanzgruppe 10 zugeordnet, mit der eine zeilenweise Redundanzgruppe gebildet ist. Speichereinheiten 2.1, ..., 2.5, 2.r sind von einer zweiten Redundanzgruppe 20 umfasst, die ebenfalls eine zeilenweise Redundanzgruppe bildet. Diese setzt sich fort bis zu einer fünften Redundanzgruppe 50, welche. Speichereinheiten 5.1, ..., 5.5, 5.r umfasst.

Darüber hinaus sind in dem Datenspeichersystem nach Fig. 1 spaltenweise Redundanzgruppen gebildet, die mit Hilfe gestrichelter Linien dargestellt sind. Beispielhaft sei auf eine Redundanzgruppe 100 verwiesen, welche die Speichereinheiten 1.1, ..., 5.1, 5.r umfasst. Hieraus ergibt sich, dass die Speichereinheit 1.1 sowohl von der zeilenweisen Redundanzgruppe 10 als auch von der spaltenweisen Redundanzgruppe 100 umfasst ist. In analoger Weise gilt die Mehrfachzugehörigkeit dann auch für die anderen Speichereinheiten des Datenspeichersystems in Fig. 1.

Sowohl die zeilenweisen Redundanzgruppen 10, ..., 50 als auch die spaltenweisen Redundanzgruppen 100, ..., 500 sind ein und derselben Speichersystemebene oder Hierarchieebene in dem Datenspeichersystem zugeordnet, was bedeutet, dass sämtliche Speichereinheiten, die hiervon umfasst sind, von der in dem Datenspeichersystem implementierten Datenspeichersystemverwaltung in der zugehörigen Speichersystemebene individuell und direkt adressiert werden können, um hierin beispielsweise Daten abzulegen oder auszulesen.

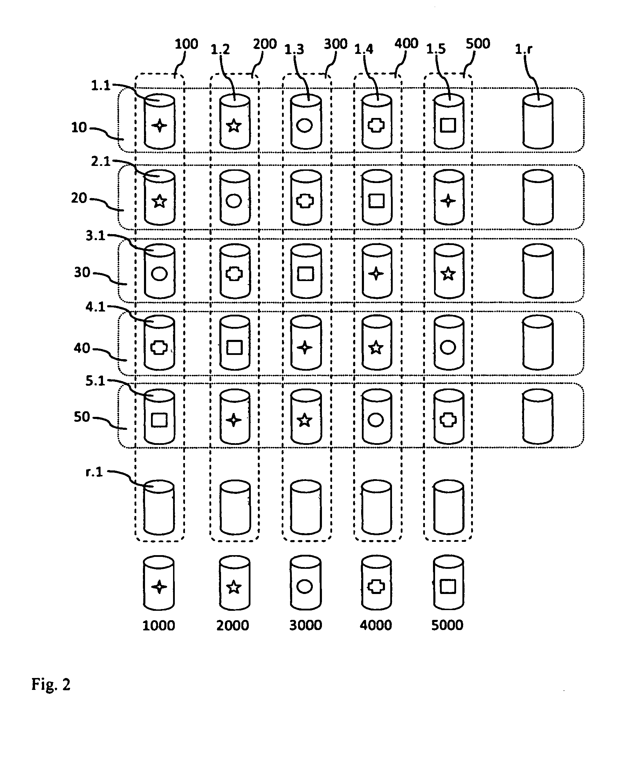

Fig. 2 zeigt eine schematische Darstellung einer weiteren Anordnung von Speichereinheiten eines Datenspeichersystems gemäß einer zweidimensionalen Struktur mit mehreren Redundanzgruppen.

Eine zweifache Redundanz ist hierbei unter Beibehaltung einer zweidimensionalen Struktur wie in Fig. 1 auf eine dreifache Redundanz erweitert. Beispielhaft wird hier, wie in Fig. 2 gezeigt, von einer Anordnung von fünf mal fünf Speichereinheiten 1.1, ..., 1.5, 2.1, ..., 2.5, ..., 5.1, ..., 5.5 ausgegangen. Für die Redundanz der zweidimensionalen Anordnung sind die Speichereinheiten 1.r, ..., 5.r sowie r.1, ..., r.5 hinzugefügt. Die Redundanzgruppe 10 besteht also aus den Speichereinheiten 1.1, ..., 1.5 sowie 1.r. Für die Erweiterung sind Speichereinheiten 1.d, ..., 5.d hinzugefügt, die der Übersichtlichkeit halber nicht in Fig. 2 dargestellt sind. Es werden weitere Redundanzgruppen 1000, ..., 5000 über Diagonalen gebildet, deren Zusammensetzung in Fig. 2 mit Hilfe eines jeweiligen Symbols schematisch gezeigt ist. So ist die Redundanzgruppe 1000 von den Speichereinheiten {1.1, 2.5, 3.4, 4.3, 5.2, 1.d} gebildet, die Redundanzgruppe 2000 von den Speichereinheiten {1.2, 2.1, 3.5, 4.4, 5.3, 2.d}, die Redundanzgruppe 3000 von den Speichereinheiten {1.3, 2.2, 3.1, 4.5, 5.4, 3.d}, die Redundanzgruppe 4000 von den Speichereinheiten {1.4, 2.3, 3.2, 4.1, 5.5, 4.d} und die Redundanzgruppe 5000 von den Speichereinheiten {1.5, 2.4, 3.3, 4.2, 5.1, 5.d}.

Hier ist jede der Speichereinheiten 1.1, ..., 5.5 Teil von genau drei Redundanzgruppen, und je zwei Redundanzgruppen haben nur eine gemeinsame Speichereinheit. Diese Anordnung kann den Verlust von beliebigen sieben Speichereinheiten ohne Datenverlust kompensieren.

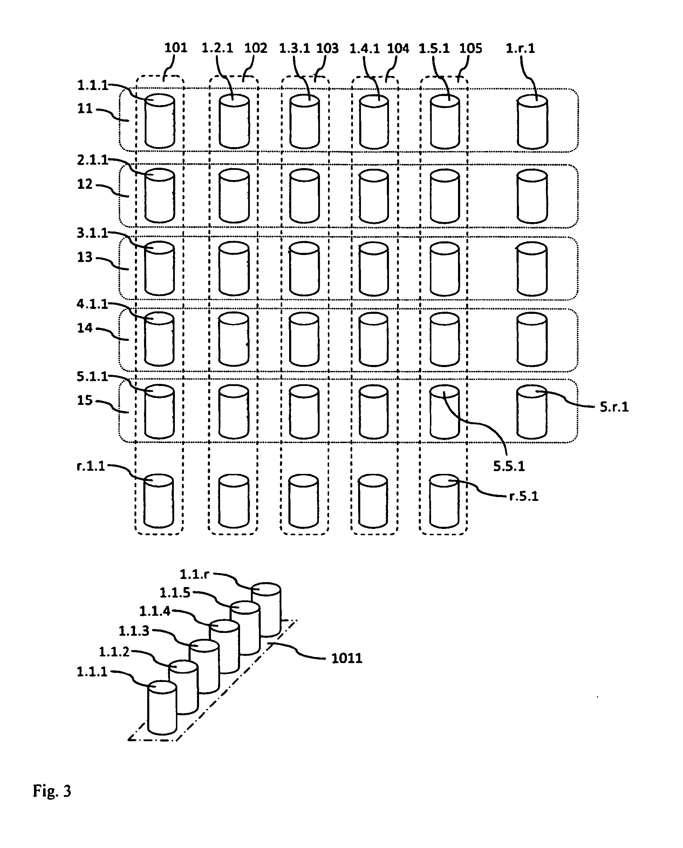

Fig. 3 zeigt als eine andere mögliche Erweiterung der Anordnung aus Fig. 1 die Erweiterung in drei Dimensionen. Hierbei werden die beispielhaften fünf Ebenen, wie sie in Fig.1 gezeigt sind, hintereinander angeordnet. Wie in Fig. 3 gezeigt, sind dann Speichereinheiten 1.1.1, ..., 5.5.5 gebildet. Des weiteren gibt es in jeder Ebene Speichereinheiten zur Ausbildung der Redundanz, wie in Verbindung mit Fig. 2 mittels des Index ,r' bezeichnet, also x.y.r, x.r.y und r.x.y. In jeder Ebene werden Redundanzgruppen analog zum Ausführungsbeispiel in Fig. 1 gebildet. Es entstehen hierbei in der 1. Ebene Redundanzgruppen 11, ..., 15 in der Horizontalen und Redundanzgruppen 101, ..., 105 in der Vertikalen. In der 2. Ebene entstehen Redundanzgruppen 21,.... 25 in der Horizontalen und Redundanzgruppen 201, ..., 205 in der Vertikalen. In der 5. Ebene entstehen also Redundanzgruppen 51, ..., 55 in der Horizontalen und Redundanzgruppen 501, ..., 505 in der Vertikalen.

Zusätzlich werden Gruppen entlang der Z-Achse gebildet. Hierbei entstehen Redundanzgruppen 1011, ..., 1055. Die Redundanzgruppe 1011 enthält die Speichereinheiten 1.1.1, ..., 1.1.5 und 1.1.r, die, der Übersichtlichkeit halber nicht gezeigte, Redundanzgruppe 1055 umfasst die Speichereinheiten 5.5.1, ..., 5.5.5 und 5.5.r. Die übrigen Gruppen werden analog gebildet. Diese Anordnung verkraftet genau wie die vorhergehend beschriebenen Ausführungsformen den Ausfall von sieben beliebigen Speichereinheiten, ohne dass Daten verloren gehen.

Analog lässt sich die Anordnung auf beliebig viele Kombination erweitern. Zusätzlich lassen sich auch noch die oben beschriebenen Diagonalen hinzufügen. Im Allgemeinen können die Datenspeichersysteme, in dem jede Speichereinheit mindestens n Redundanzgruppen zugeordnet ist, den Ausfall von beliebigen 2ⁿ-1 Speichereinheiten kompensieren, ohne dass Daten verloren gehen.

In den in Fig. 1 bis Fig. 3 gezeigten Beispielen wird davon ausgegangen, dass als Redundanzverfahren ein Verfahren gewählt wird, bei dem die Redundanzinformationen auf gesonderten Speichereinheiten gespeichert wird. Es kann aber auch vorgesehen sein, Verfahren mit verteilter Redundanz zu wählen, solange jede Speichereinheit nicht mehr als einer Redundanzgruppe von Speichereinheiten mit verteilter Redundanz angehört. Beispielsweise bilden dann die Speichereinheiten 1.1, ..., 1.5 sowie 1.r eine Redundanzgruppe, wobei die Redundanzinformation gleichermaßen über alle Speichereinheiten verteilt ist.

Weitere Vorteile ergeben sich im Falle des Ausfalls einer Speichereinheit. In einer herkömmlichen Speichersystemausbildung wie beispielsweise RAID können zur Rekonstruktion der Daten nur die Speichereinheiten hinzugezogen werden, denen die ausgefallene Speichereinheit angehört. Sobald jedoch die Speichereinheit mehreren Redundanzgruppen angehört, können auch die Daten aller diesen Redundanzgruppen angehörenden Speichereinheiten hinzugezogen werden. Dadurch kann die Wiederherstellungsgeschwindigkeit erhöht werden, und bei gleicher Geschwindigkeit wird die Belastung der für die Rekonstruktion benötigten Speichereinheiten reduziert.

Die in der vorstehenden Beschreibung, den Ansprüchen und den Figuren offenbarten Merkmale der Erfindung können sowohl einzeln als auch in beliebiger Kombination für die Verwirklichung der Erfindung in ihren verschiedenen Ausführungsformen von Bedeutung sein.

## Patentansprüche

1. Datenspeichersystem, insbesondere RAID basiertes Speichersystem, mit mehreren Speichereinheiten, welche einer Speichersystemebene zugeordnet sind, indem die Speichereinheiten von einer Speichersystemverwaltung in der Speichersystemebene alle individuell adressierbar sind, und in denen wenigstens zwei Redundanzgruppen von Speichereinheiten gebildet sind, wobei wenigstens eine der Speichereinheiten mehr als einer der wenigstens zwei Redundanzgruppe und zwei beliebigen der wenigstens zwei Redundanzgruppen jeweils höchstens eine der Speichereinheiten gemeinsam zugeordnet ist, wobei die mehreren Speichereinheiten jeweils als ein Festplattenspeicher oder ein Flash-Speicher ausgeführt sind.

2. Datenspeichersystem nach Anspruch 1, **dadurch gekennzeichnet, dass** die wenigstens eine der Speichereinheiten mehr als zwei der wenigstens zwei Redundanzgruppen zugeordnet ist.

3. Datenspeichersystem nach Anspruch 1 oder 2, **dadurch gekennzeichnet, dass** mehrere der Speichereinheiten mehr als einer der wenigstens zwei Redundanzgruppen zugeordnet sind, wobei die mehreren Speichereintieiten jeweils einer gleichen Anzahl von Redundanzgruppen zugeordnet sind.

4. Datenspeichersystem nach mindestens einem der vorangehenden Ansprüche, **dadurch gekennzeichnet, dass** die wenigstens zwei Redundanzgruppen jeweils als eine Paritäts-Gruppe gebildet sind.

5. Datenspeichersystem nach mindestens einem der vorangehenden Ansprüche, **dadurch gekennzeichnet, dass** die wenigstens zwei Redundanzgruppen jeweils als eine RAID-Gruppe gebildet sind.

6. Datenspeichersystem nach mindestens einem der vorangehenden Ansprüche, **dadurch gekennzeichnet, dass** die mehreren Speichereinheiten jeweils als ein Festplattenspeicher ausgeführt sind.

7. Datenspeichersystem nach mindestens einem der Ansprüche 1 bis 5, **dadurch gekennzeichnet, dass** die mehreren Speichereinheiten jeweils als ein Flash-Speicher ausgeführt sind.

8. Verfahren zum Betreiben eines Datenspeichersystems, insbesondere eines RAID basierten Speichersystems, mit mehreren Speichereinheiten, bei dem die mehreren Speichereinheiten einer Speichersystemebene zugeordnet werden, indem die Speichereinheiten von einer Speichersystemverwaltung in der Speichersystemebene alle individuell adressierbar sind, und in denen wenigstens zwei Redundanzgruppen von Speichereinheiten gebildet werden, wobei wenigstens eine der Speichereinheiten mehr als einer der wenigstens zwei Redundanzguppen und zwei beliebigen der wenigstens zwei Redundanzgruppen jeweils höchstens eine der Speichereinheiten gemeinsam zugeordnet wird, wobei die mehreren Speichereinheiten jeweils als ein Festplattenspeicher oder ein Flash-Speicher ausgeführt sind.

9. Verfahren nach Anspruch 8, **dadurch gekennzeichnet, dass** die wenigstens eine der Speichereinheiten mehr als zwei der wenigstens zwei Redundanzgruppcn zugeordnet wird.

10. Verfahren nach Anspruch 8 oder 9, **dadurch gekennzeichnet, dass** mehrere der Speichereinheiten mehr als einer der wenigstens zwei Redundanzgruppen zugeordnet werden, wobei die mehreren Speichereinheiten die jeweils einer gleichen Anzahl von Redundantgruppen zugeordnet werden.

11. Verfahren nach mindestens einem der Ansprüche 8 bis 10, **dadurch gekennzeichnet, dass** die wenigstens zwei Redundanzgruppen jeweils als eine Paritäts-Gruppe gebildet werden.

12. Verfahren nach mindestens einem der Ansprüche 8 bis 11, **dadurch gekennzeichnet, dass** die wenigstens zwei Redundanzgruppen jeweils als eine RAID-Gruppe gebildet werden.

13. Verfahren nach mindestens einem der Ansprüche 8 bis 12, **dadurch gekennzeichnet, dass** die mehreren Speichereinheiten jeweils als ein Festplattenspeicher ausgeführt werden.

14. Verfahren nach mindestens einem der Ansprüche 8 bis 12, **dadurch gekennzeichnet, dass** die mehreren Speichereinheiten jeweils als ein Flash-Speicher ausgeführt werden.

15. Computerprogramm mit Programmcode zur Durchführung aller Verfährensschritte nach einem der Ansprüche 8 bis 14, wenn der Programmcode auf einem Computer ausgeführt wird.

16. Computerprogramm mit Programmcode, der auf einem maschinenlesbaren Träger gespeichert ist, zur Durchführung des Verfahrens nach einem der Ansprüche 8 bis 14, wenn der Programmcode auf einem Computer ausgeführt wird.

17. Computerprogramm-Produkt mit Programmcode zur Durchführung des Verfahrens nach einem der Ansprüche 8 bis 14, wenn der Programmcode auf einem Computer ausgeführt wird.

## Claims

1. Data storage system, particularly a RAID-based storage system, with a plurality of memory units which are assigned to a storage system level, in that all of the memory units can be addressed individually by a storage system administration in the storage system level, and at least two redundant groups of memory units are formed in the same, wherein at least one of the memory units is assigned to more than one of the at least two redundant groups and in each case at most one of the memory units is commonly assigned to any two of the at least two redundant groups, wherein the plurality of memory units are in each case realised as a hard disk memory or a flash memory.

2. Data storage system according to Claim 1, **characterised in that** the at least one of the memory units is assigned to more than two of the at least two redundant groups.

3. Data storage system according to Claim 1 or 2, **characterised in that** a plurality of the memory units are assigned to more than one of the at least two redundant groups, wherein the plurality of memory units are in each case assigned to an identical number of redundant groups.

4. Data storage system according to at least one of the preceding claims, **characterised in that** the at least two redundant groups are formed as a parity group in each case.

5. Data storage system according to at least one of the preceding claims, **characterised in that** the at least two redundant groups are formed as a RAID group in each case.

6. Data storage system according to at least one of the preceding claims, **characterised in that** the plurality of memory units are in each case realised as a hard disk memory.

7. Data storage system according to at least one of Claims 1 to 5, **characterised in that** the plurality of memory units are in each case realised as a flash memory.

8. Method for operating a data storage system, particularly a RAID-based storage system, in which the plurality of memory units are assigned to a storage system level, in that all of the memory units can be addressed individually by a storage system administration in the storage system level, and at least two redundant groups of memory units are formed in the same, wherein at least one of the memory units is assigned to more than one of the at least two redundant groups and in each case at most one of the memory units is commonly assigned to any two of the at least two redundant groups, wherein the plurality of memory units are in each case realised as a hard disk memory or a flash memory.

9. Method according to Claim 8, **characterised in that** the at least one of the memory units is assigned to more than two of the at least two redundant groups.

10. Method according to Claim 8 or 9, **characterised in that** a plurality of the memory units are assigned to more than one of the at least two redundant groups, wherein the plurality of memory units are in each case assigned to an identical number of redundant groups.

11. Method according to at least one of Claims 8 to 10, **characterised in that** the at least two redundant groups are formed as a parity group in each case.

12. Method according to at least one of Claims 8 to 11, **characterised in that** the at least two redundant groups are formed as a RAID group in each case.

13. Method according to at least one of Claims 8 to 12, **characterised in that** the plurality of memory units are in each case realised as a hard drive memory.

14. Method according to at least one of Claims 8 to 12, **characterised in that** the plurality of memory units are in each case realised as a flash memory.

15. Computer program with program code for carrying out all of the method steps according to one of Claims 8 to 14 when the program code is executed on a computer.

16. Computer program with program code, which is stored on a machine-readable carrier, for carrying out the method according to one of Claims 8 to 14 when the program code is executed on a computer.

17. Computer program with program code for carrying out the method according to one of Claims 8 to 14 when the program code is executed on a computer.

## Revendications

1. Système de mémorisation de données, notamment système de mémoire basé sur RAID, comportant plusieurs unités de mémoire, auxquelles un niveau de système de mémoire est affecté, en adressant individuellement toutes les unités de mémoire par une gestion de système de mémoire dans le niveau de système de mémoire, et dans lesquelles au moins deux groupes de redondance d'unités de mémoire sont formés, moyennant quoi au moins une des unités de mémoire est affectée à plus d'un des au moins deux groupes de redondance et au choix deux des au moins deux groupes de redondance sont affectés respectivement en commun à au maximum une des unités de mémoire, moyennant quoi les plusieurs unités de mémoire sont réalisées respectivement comme une mémoire à disque dur ou une mémoire flash.

2. Système de mémorisation de données selon la revendication 1, **caractérisé en ce que** au moins une des unités de mémoire est affectée à plus de deux des au moins deux groupes de redondance.

3. Système de mémorisation de données selon la revendication 1 ou 2, **caractérisé en ce que** plusieurs des unités de mémoire sont affectées à plus d'un des au moins deux groupes de redondance, moyennant quoi les plusieurs unités de mémoire sont affectées respectivement à un nombre identique de groupes de redondance.

4. Système de mémorisation de données selon au moins une des revendications précédentes, **caractérisé en ce que** les au moins deux groupes de redondance sont formés respectivement comme un groupe paritaire.

5. Système de mémorisation de données selon au moins une des revendications précédentes, **caractérisé en ce que** les au moins deux groupes de redondance sont formés respectivement comme un groupe RAID.

6. Système de mémorisation de données selon au moins une des revendications précédentes, **caractérisé en ce que** les plusieurs unités de mémoire sont réalisées respectivement comme une mémoire à disque dur.

7. Système de mémorisation de données selon au moins une des revendications 1 à 5, **caractérisé en ce que** les plusieurs unités de mémoires sont réalisées respectivement comme une mémoire flash.

8. Procédé d'exploitation d'un système de mémorisation de données, notamment d'un système de mémoire basé sur RAID, comportant plusieurs unités de mémoire, dans lequel les plusieurs unités de mémoire sont affectées à un niveau de système de mémoire, en adressant individuellement toutes les unités de mémoire par une gestion de système de mémoire dans le niveau de système de mémoire, et dans lesquelles au moins deux groupes de redondance d'unités de mémoire sont formés, moyennant quoi au moins une des unités de mémoire est affectée à plus d'un des au moins deux groupes de redondance et dans au choix des au moins deux groupes de redondance sont affectés respectivement en commun à au maximum une des unités de mémoire, moyennant quoi les plusieurs unités de mémoire sont réalisées respectivement comme une mémoire à disque dur ou une mémoire flash.

9. Procédé selon la revendication 8, **caractérisé en ce que** au moins une des unités de mémoire est affectée à plus de deux des au moins deux groupes de redondance.

10. Procédé selon la revendication 8 ou 9, **caractérisé en ce que** plusieurs des unités de mémoire sont affectées à plus d'un des au moins deux groupes de redondance, moyennant quoi les plusieurs unités de mémoire sont affectées respectivement à un nombre identique de groupes de redondance.

11. Procédé selon au moins une des revendications 8 à 10, **caractérisé en ce que** les au moins deux groupes de redondance sont formés respectivement comme un groupe paritaire.

12. Procédé selon au moins une des revendications 8 à 11, **caractérisé en ce que** les au moins deux groupes de redondance sont formés respectivement comme un groupe RAID.

13. Procédé selon au moins une des revendications 8 à 12, **caractérisé en ce que** les plusieurs unités de mémoire sont réalisées respectivement comme une mémoire à disque dur.

14. Procédé selon au moins une des revendications 8 à 12, **caractérisé en ce que** les plusieurs unités de mémoire sont réalisées respectivement comme une mémoire flash.

15. Programme informatique avec du code de programme pour mettre en oeuvre toutes les étapes de procédé selon une des revendications 8 à 14, quand le code de programme est exécuté sur un ordinateur.

16. Programme informatique avec du code de programme, qui est mémorisé sur un support lisible par une machine, pour mettre en oeuvre le procédé selon une des revendications 8 à 14, quand le code de programme est exécuté sur un ordinateur.

17. Produit de programme informatique avec du code de programme pour mettre en oeuvre le procédé selon une des revendications 8 à 14, quand le code de programme est exécuté sur un ordinateur.
